(19) Europäisches Patentamt / European Patent Office / Office européen des brevets

(11) **EP 3 031 867 A1**

(12) **EUROPEAN PATENT APPLICATION**
published in accordance with Art. 153(4) EPC

(43) Date of publication:
**15.06.2016 Bulletin 2016/24**

(51) Int Cl.:
*C09C 1/48* (2006.01)    *C08K 3/04* (2006.01)
*C08L 101/00* (2006.01)    *C09C 1/56* (2006.01)
*H01B 1/04* (2006.01)    *H01B 1/24* (2006.01)

(21) Application number: **14833846.0**

(22) Date of filing: **07.08.2014**

(86) International application number:
**PCT/JP2014/070821**

(87) International publication number:
**WO 2015/020130 (12.02.2015 Gazette 2015/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.08.2013   JP 2013165223**

(71) Applicant: **Lion Specialty Chemicals Co., Ltd.**
**Sumida-ku**
**Tokyo 130-8644 (JP)**

(72) Inventors:
• **HONMA, Masahiro**
  **Tokyo 130-8644 (JP)**
• **ABE, Yutaka**
  **Tokyo 130-8644 (JP)**

• **SHINOHARA, Akira**
  **Tokyo 130-8644 (JP)**
• **KOHNO, Youichirou**
  **Tokyo 130-8644 (JP)**
• **OHARA, Katsuyoshi**
  **Tokyo 130-8644 (JP)**
• **SATO, Hiromu**
  **Tokyo 130-8644 (JP)**
• **HOSOKAWA, Yasutaka**
  **Tokyo 130-8644 (JP)**
• **OSAKO, Yoko**
  **Tokyo 130-8644 (JP)**

(74) Representative: **Cabinet Laurent & Charras**
**Le Contemporain**
**50 Chemin de la Bruyère**
**69574 Dardilly Cedex (FR)**

(54) **CARBON BLACK AND PRODUCTION METHOD THEREFOR, AND ELECTRICITY STORAGE DEVICE AND CONDUCTIVE RESIN COMPOSITION**

(57)    In carbon black of the present invention, peak intensity $I_A$ of a main peak derived from $Fe_3C$, peak intensity $I_B$ of a main peak derived from FeS, and peak intensity $I_C$ of a main peak derived from FeO(OH) in a radial distribution function, which is obtained by performing Fourier transform with respect to a broadband X-ray absorption fine structure spectrum of a K absorption edge, satisfy $0.7 \leq I_A / (I_B + I_C) \leq 6.0$. A production method for a carbon black of the present invention includes subjecting raw material carbon black to a heat treatment at a temperature of 900°C to 1500°C for a time of 5 minutes to 180 minutes under an atmosphere of a halogen element-containing gas.

FIG. 1

EP 3 031 867 A1

**Description**

[Technical Field]

The present invention relates to carbon black and a production method therefor, and an electricity storage device and a conductive resin composition.
Priority is claimed on Japanese Patent Application No. 2013-165223, filed on August 8, 2013, the content of which is incorporated herein by reference.

[Background Art]

Carbon black has been widely used in various applications such as a conductivity imparting agent with respect to printing ink, a coating material, a resin, and the like, a rubber reinforcing material, a resin colorant, a conductive assistant of a positive electrode and a negative electrode of a secondary battery, a catalyst support body of a fuel battery, and the like.
Examples of a production method for carbon black include (1) a furnace method in which raw material is subjected to incomplete combustion, (2) a contact method in which a raw material is subjected to combustion by a burner tip, the flame thereof is brought into contact with channel steel, and carbon black is collected, (3) a thermal method in which a natural gas is thermally decomposed, and the like. Among them, the furnace method is most generally used.
In the furnace method, creosote oil or petroleum-based heavy oil is mainly used as the raw material, is subjected to incomplete combustion in air of which the amount is less than a theoretical amount necessary for complete combustion, and then, is cooled with water, and finally carbon black is captured by water. Therefore, an aqueous dispersion is obtained. In the raw material, a metal component such as Fe, Ni, and V is contained, and thus, the metal component is also contained in carbon black to be obtained. In addition, in the carbon black to be obtained, cooling water or a metal component from production facilities is also mixed.
The metal component which remains in the carbon black, in particular, Fe, mainly exists as an oxide or a sulfide. When the iron oxide or the iron sulfide, for example, is dispersed in a resin, the iron oxide or the iron sulfide reduces the molecular weight of the resin, and thus, deterioration occurs. For this reason, in general, the carbon black is required to have high purity by removing the metal component maximally. In particular, such a tendency becomes strong in the battery field, the semiconductor field, and the like.
Therefore, a method of reducing the metal component in the carbon black has been proposed. For example, examples of the method include the following methods.

(i) A method in which an aqueous dispersion of carbon black is brought into contact with various water soluble chelating agents, a metal component contained in the carbon black is eluted and is captured in the chelating agent, is shifted to a liquid phase, and then, is subjected to solid and liquid separation (Patent Literature 1).
(ii) A method in which an aqueous dispersion of carbon black is strongly stirred, and then an eluted metal component is separated by filtration or the like (Patent Literature 2).
(iii) A method in which carbon black is washed with by an aqueous solution of an inorganic acid, and a metal component is eluted and is separated (Patent Literature 3).
(iv) A method in which a heat treatment is performed at 2800°C in a chlorine gas flow (Patent Literature 4).

[Citation List]

[Patent Literature]

[Patent Literature 1] Japanese Unexamined Patent Application, First Publication No. 2005-113091
[Patent Literature 2] Japanese Unexamined Patent Application, First Publication No. S58-222157
[Patent Literature 3] Japanese Unexamined Patent Application, First Publication No. 2005-220320
[Patent Literature 4] Japanese Unexamined Patent Application, First Publication No. 2002-105355

[Summary of Invention]

[Technical Problem]

However, a removal rate of the metal component is insufficient in the methods of (i) to (iii), and thus, it is difficult to sufficiently suppress the occurrence of a problem due to the metal component such as a reduction in the molecular weight of the resin. In addition, in the method of (iv), the carbon black is crystallized into pseudo graphite, a specific surface area considerably decreases, and dispersibility may become insufficient.

An object of the present invention is to provide carbon black in which dispersibility is excellent, elution of a metal component is reduced, and the occurrence of a problem due to the metal component can be suppressed, and a production method therefor. In addition, another object of the present invention is to provide an electricity storage device and a conductive resin composition which use the carbon black described above.

[Solution to Problem]

In carbon black of the present invention, peak intensity $I_A$ of a main peak derived from $Fe_3C$, peak intensity $I_B$ of a main peak derived from $FeS$, and peak intensity $I_C$ of a main peak derived from $FeO(OH)$ in a radial distribution function, which is obtained by performing Fourier transform with respect to a broadband X-ray absorption fine structure spectrum of a K absorption edge, satisfy conditions of following Expression (1).

$$0.7 \leq I_A / (I_B + I_C) \leq 6.0 \quad (1)$$

In the carbon black of the present invention, it is preferable that a DBP oil absorption amount is within a range from 100 to 600 $cm^3$/100 g.

In addition, it is preferable that a BET specific surface area is within a range from 50 to 1600 $m^2$/g.

An electricity storage device of the present invention includes an electrode containing the carbon black of the present invention.

A conductive resin composition of the present invention contains the carbon black of the present invention.

A production method for the carbon black of the present invention include subjecting raw material carbon black to a heat treatment at a temperature of 900°C to 1500°C for a time of 5 minutes to 180 minutes under an atmosphere of a halogen element-containing gas, to thereby producing the carbon black of the present invention.

[Advantageous Effects of Invention]

In the carbon black of the present invention, dispersibility is excellent, elution of a metal component is reduced, and the occurrence of a problem due to the metal component is suppressed.

According to the production method for carbon black of the present invention, carbon black is obtained in which dispersibility is excellent, elution of a metal component is reduced, and the occurrence of a problem due to the metal component is suppressed.

In the electricity storage device of the present invention, dispersibility of carbon black is excellent, elution of a metal component is reduced, and the occurrence of a problem due to the metal component is suppressed.

In the conductive resin composition of the present invention, dispersibility of carbon black is excellent, elution of a metal component is reduced, and the occurrence of a problem due to the metal component is suppressed.

[Brief Description of Drawings]

FIG. 1 is an XAFS spectrum of $Fe_3C$, $FeS$, and $FeO(OH)$.
FIG. 2 is a graph of a radial distribution function in which the XAFS spectrum of FIG. 1 is subjected to Fourier transform.
FIG. 3 is a graph of a radial distribution function of an evaluation sample of Example 2.
FIG. 4 is a graph of a radial distribution function of an evaluation sample of Comparative Example 6.
FIG. 5 is a graph of a radial distribution function of an evaluation sample of Comparative Example 9.

[Description of Embodiments]

<Carbon Black>

In carbon black of the present invention, peak intensity $I_A$ of a main peak derived from $Fe_3C$, peak intensity $I_B$ of a main peak derived from $FeS$, and peak intensity $I_C$ of a main peak derived from $FeO(OH)$ in a radial distribution function obtained by performing Fourier transform with respect to a broadband X-ray absorption fine structure (EXAFS) spectrum of a K absorption edge satisfy conditions of following Expression (1).

$$0.7 \leq I_A / (I_B + I_C) \leq 6.0 \quad (1)$$

The present inventors have tried to modify the metal component in the carbon black to be in an inert state without setting carbon black to have high purity by removing a metal component as in the related art. Then, as a result of intensive studies of the present inventors, it has been found that, when the carbon black is modified to satisfy Expression (1) described above, an Fe component in the carbon black becomes inert, and the occurrence of a problem is suppressed.

The carbon black of the present invention satisfies the conditions of Expression (1) described above, and thus, dispersibility of the carbon black is excellent, elution of the metal component is reduced, and the occurrence of a problem due to the metal component is suppressed.

The lower limit value of $I_A / (I_B + I_C)$ is 0.7, is preferably 1.0, and is more preferably 1.4, from the viewpoint of easily reducing the elution of the metal component and of suppressing the occurrence of a problem such as a reduction in the molecular weight of a resin due to the metal component.

The upper limit value of $I_A / (I_B + I_C)$ is 6.0, is preferably 4.0, and is more preferably 3.0, from the viewpoint of suppressing graphitization of the carbon black and of having more excellent dispersibility.

[X-Ray Absorption Fine Structure (XAFS) Analysis]

An EXAFS spectrum of the carbon black is obtained by XAFS analysis. The XAFS analysis is a method in which a change in an X-ray absorption amount in the vicinity of X-ray absorption edge energy of a measurement target atom is analyzed with high accuracy. A method (a transmissive XAFS method) in which analysis is performed by measuring X-ray dose transmitted through a sample is used as the XAFS analysis.

When substances are irradiated with an X-ray, a part thereof is absorbed in the substances and loses energy. In a transmissive XAFS method, the absorbance of the X-ray due to the substances is measured while continuously changing the energy of the X-ray to be emitted, the absorbance with respect to the energy of the emitted X-ray is plotted. Through this operation, it is possible to obtain an XAFS spectrum (an X-ray absorption spectrum).

Specifically, incident X-ray dose when a continuous X-ray is spectrally diffracted into a specific wavelength by a monochromator and is incident on the sample is set to $I_0$, and transmitted X-ray dose which is transmitted through the sample is set to I. When a linear absorption coefficient of the sample is set to $\mu$, and the thickness of the sample is set to t, absorbance A of X-ray absorption of the sample is represented by following Expression (2).

$$A = \mu t = -\ln(I/I_0) \quad (2)$$

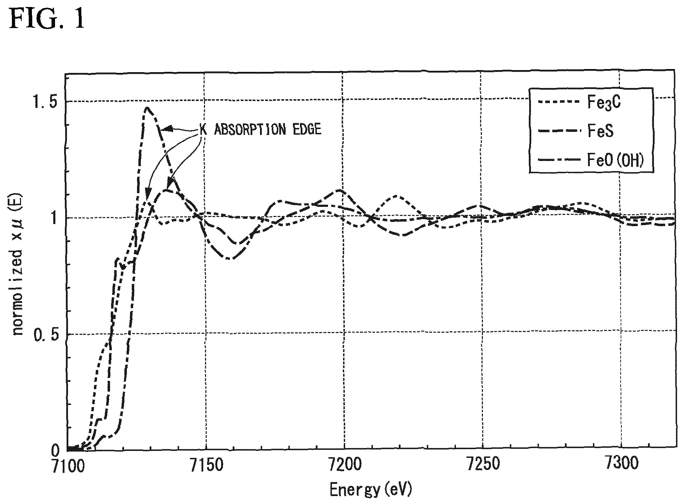

The energy of the X-ray which is incident on the sample is continuously changed, and energy dependency of the absorbance is measured, to thereby obtain an XAFS spectrum as shown in FIG. 1.

In the XAFS spectrum, a portion in which the absorbance rapidly increases is an absorption edge. In addition, in the XAFS spectrum, an energy region, in which a spectrum is slightly waved, from the absorption edge to a point in which the energy is approximately 1000 eV higher than that of the absorption edge is an EXAFS spectrum. The energy position of the absorption edge is intrinsic to an element, and thus, an element can be specified from the EXAFS spectrum.

In the present invention, the absorption edge of the absorption due to a K shell (Is) electron of an Fe atom, that is, an EXAFS spectrum of a K absorption edge is used. The position of the K absorption edge of Fe is set to the energy position of an inflection point of a region in which the absorbance rapidly increases.

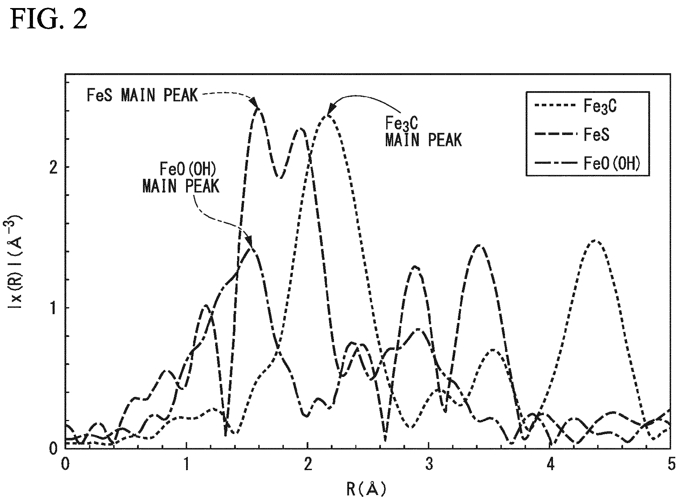

The XAFS spectrum as illustrated in FIG. 1 is subjected to Fourier transform, to thereby obtain a radial distribution function as illustrated in FIG. 2. In the radial distribution function, peak intensity $I_A$ of a main peak derived from $Fe_3C$, peak intensity $I_B$ of a main peak derived from FeS, and of peak intensity $I_C$ a main peak derived from FeO(OH) are obtained, and $I_A / (I_B + I_C)$ is calculated. When both of FeS and FeO(OH) exist in the carbon black, the main peak derived from FeS and the main peak derived from FeO(OH) cannot be completely separated. However, $I_B + I_C$ can be calculated by adding up the peak intensities of the respective main peaks.

The respective main peaks derived from $Fe_3C$, FeS, and FeO(OH) in the measurement of the carbon black can be identified by previously measuring the respective main peaks by using standard substances of $Fe_3C$, FeS, and FeO(OH). In addition, in a case where the metal content is small, the measurement can be performed by condensing the sample by using a usual method.

The carbon black is a powder configured of secondary particles formed of a chain body in which primary particles are connected into the shape of a bunch of grapes. Because n-Dibutyl phthalate (DBP) is absorbed in a void portion or the like of the chain body which is in the shape of a bunch of grapes, a DBP oil absorption amount is an important index value of the carbon black.

The DBP oil absorption amount of the carbon black of the present invention is preferably within a range from 100 to 600 $cm^3$/100 g, and is more preferably within a range from 200 to 500 $cm^3$/100 g. When the DBP oil absorption amount of the carbon black is greater than or equal to the lower limit value, excellent conductivity is easily obtained. When the DBP oil absorption amount of the carbon black is less than or equal to the upper limit value, excellent dispersibility is easily obtained.

Furthermore, the DBP oil absorption amount of the carbon black is a value measured in conditions based on ASTM D 2414 using a sample of 9 g.

A BET specific surface area of the carbon black of the present invention is preferably within a range from 50 to 1600 $m^2$/g, and is more preferably within a range from 200 to 1000 $m^2$/g. When the BET specific surface area of the carbon black is greater than or equal to the lower limit value, excellent conductivity is easily obtained. When the BET specific surface area of the carbon black is less than or equal to the upper limit value, excellent dispersibility is easily obtained.

Furthermore, the BET specific surface area of the carbon black is measured by a method based on ASTM D 3037.

The upper limit value of the Fe amount contained in the carbon black of the present invention is preferably 30 ppm by mass, is more preferably 10 ppm by mass, is even more preferably 7 ppm by mass, and is particularly preferably 5 ppm by mass. Accordingly, the elution of the Fe component is further reduced, and the occurrence of a problem due to the Fe component is suppressed.

The lower limit value of the Fe amount contained in the carbon black of the present invention is preferably 0.1 ppm by mass, and is more preferably 5 ppm by mass, from the viewpoint of purification efficiency (the purification cost and a yield). In addition, because the Fe component becomes inert as $Fe_3C$ in the carbon black of the present invention, the problem due to the Fe component is suppressed even when the Fe amount is greater than 30 ppm by mass. For example, the upper limit value of the Fe amount may be 40 ppm by mass, and may be 150 ppm by mass, from the viewpoint of making the Fe component inert. In addition, the lower limit value of the Fe amount may be 10 ppm by mass.

[Production Method for Carbon Black]

The carbon black of the present invention, for example, is obtained by performing a heat treatment with respect to raw material carbon black, and by modifying the raw material carbon black. Usable examples of raw material carbon black include carbon black obtained by a known production method such as a furnace method, a channel method, or a thermal method. In the raw material carbon black, $I_A / (I_B+I_C)$ is less than 0.7, and thus, Expression (1) described above is not satisfied.

Specific examples of the raw material carbon black include lamp black, channel black, furnace black, acetylene black, Ketjen black, and the like.

Examples of commercially available raw material carbon black include "Ketjen black EC300J", "Ketjen black EC600JD", and "Lionite CB" manufactured by Lion Corporation, "Denka black" manufactured by Denka Company Limited., and the like.

The present invention is particularly effective at the time of using raw material carbon black of which the Fe amount is greater than 10 ppm by mass.

In the raw material carbon black, the type and the amount of impurities to be included is different according to a production method or a raw material used at the time of performing purification. For example, approximately 15 ppm by mass to 60 ppm by mass of Fe is contained in Ketjen black produced by a gas furnace method. In addition, approximately 1000 ppm by mass to 5000 ppm by mass of Fe is contained in Lionite CB (manufactured by Lion Corporation).

Examples of a modification method of the raw material carbon black include a method of performing a heat treatment with respect to the raw material carbon black under an atmosphere of a halogen element-containing gas. The heat treatment, for example, is performed in an electric furnace or the like of which the atmosphere can be controlled. Specifically, for example, the following aspects are included.

The raw material carbon black is arranged in a furnace core tube, a halogen element-containing gas is supplied from a gas supply tube disposed in a first end portion of the furnace core tube, and the halogen element-containing gas is discharged from a gas discharge tube disposed in a second end portion of the furnace core tube, to thereby heat the raw material carbon black while circulating the halogen element-containing gas.

The raw material carbon black is in a powder state during the heat treatment.

Examples of the halogen element-containing gas include a halogen gas such as a fluorine gas or a chlorine gas, a hydrogen fluoride gas, a hydrogen chloride gas, a fluorocarbon-based gas, a chlorocarbon-based gas, and the like. Among these halogen element-containing gases, the chlorine gas and the hydrogen chloride gas are preferable, and the hydrogen chloride gas is more preferable, from the viewpoint of a function of modifying the metal component in the carbon black into an inert state, an effect of reducing the metal amount, corrosivity, and toxicity. In the halogen element-containing gas, an inert gas (such as an argon gas or helium gas) or a nitrogen gas may be mixed at an arbitrary ratio.

The temperature of the heat treatment is preferably within a range from 900°C to 1500°C, and is more preferably within a range from 1000°C to 1300°C. When the heating temperature is higher than or equal to the lower limit value, carbon black is easily obtained in which the elution of the metal component is reduced, and the occurrence of the problem due to the metal component is suppressed. When the heating temperature is lower than or equal to the upper limit value, carbon black is easily obtained in which the carbon black is easily prevented from being graphitized, and fired and tightened, and dispersibility is excellent.

The time of the heat treatment is preferably within a range from 5 minutes to 180 minutes, and is more preferably within a range from 10 minutes to 60 minutes. When the heating time is greater than or equal to the lower limit value, carbon black is easily obtained in which the elution of the metal component is reduced, and the occurrence of the problem due to the metal component is suppressed. When the heating time is less than or equal to the upper limit value, carbon black is easily obtained in which the carbon black is easily prevented from being graphitized, and fired and tightened, and dispersibility is excellent.

The degree of vacuum at the time of performing the heat treatment is preferably within a range from 1.33 Pa to 1.20 x $10^{-3}$ Pa, and is more preferably within a range from 1.33 x $10^{-1}$ Pa to 1.33 x $10^{-3}$ Pa. When the degree of vacuum at the time of performing the heat treatment is greater than or equal to the lower limit value, a volatile component which remains in carbon is easily removed. When the degree of vacuum at the time of performing the heat treatment is less than or equal to the upper limit value, purification efficiency is excellent.

According to the heat treatment in which the heating temperature and the heating time are controlled, a part of the Fe component contained in the raw material carbon black becomes $Fe_3C$, and thus, it is possible to obtain carbon black in which $I_A / (I_B+I_C)$ satisfies Expression (1) described above. The details of a modification mechanism of the carbon black by the heat treatment are not obvious, but it is assumed that the oxidization of the Fe component due to the halogen element-containing gas is complicatedly interacted with the reduction of the Fe component due to the carbon, and consequently, $Fe_3C$ has a specific ratio.

In addition, $FeF_3$ has excellent sublimation properties, $FeCl_2$ has sublimation properties at a temperature of higher than or equal to 677°C, and $FeCl_3$ has sublimation properties at a temperature of higher than or equal to 351°C. For this reason, in the heat treatment, the metal component in the carbon black is halogenated, and a generated halide is vaporized. Therefore, the Fe amount is reduced, and purity becomes high.

In the heat treatment, it is possible to obtain carbon black in which the Fe component becomes inert (becomes $Fe_3C$) in the Fe amount of 0.1 ppm by mass to 30 ppm by mass when using raw material carbon black of which the Fe amount is less than or equal to 50000 ppm by mass.

The carbon black of the present invention described above satisfies Expression (1) described above, and the Fe component in the carbon black becomes $Fe_3C$ at a specific ratio and becomes inert. Therefore, dispersibility is excellent, the elution of the metal component is reduced, and the occurrence of the problem due to the metal component is suppressed. A mechanism in which the Fe component in the carbon black becomes $Fe_3C$ and becomes inert is not obvious, but is assumed as follows.

In a case where metal species are oxides and sulfides, it is considered that chemical activity is obtained, and the activity is easily exhibited by existing in the carbon black. On the other hand, when the Fe component becomes $Fe_3C$, it is considered that the carbon black is close to a single crystal state in which a graphene lattice of carbon is doped with Fe, and becomes chemically stable and inert.


<Electricity Storage Device>

An electricity storage device of the present invention is an electricity storage device including an electrode which contains the carbon black of the present invention. In the electricity storage device of the present invention, the amount of metal eluted from the carbon black is reduced, and thus, a problem such as ignition is suppressed.

An aspect of the electricity storage device of the present invention is not particularly limited insofar as the electricity storage device includes an electrode which contains the carbon black of the present invention, and a known aspect can be adopted as the aspect of the electricity storage device of the present invention. Example of the electricity storage device of the present invention includes lithium ion secondary battery or the like.

Examples of the electrode include a positive electrode or a negative electrode in which an active substance layer is disposed on a collector.

The active substance layer, for example, is formed by applying an electrode mixture in which active substances, a binder, and the carbon black are dispersed in a solvent onto the collector, and by drying the electrode mixture, and then, by pressing the electrode mixture.

The active substances are not particularly limited, and known active substances which are generally used in the electrode can be used. Examples of the active substances include a lithium transition metal composite oxide or the

like represented by $Li_xMO_2$ (here, M represents one or more types of transition metals, and x represents a numerical value satisfying a relational expression of $0.05 \leq x \leq 1.10$). At least one selected from a group consisting of Mn, Co, and Ni is preferable as M.

Specific examples of the lithium transition metal composite oxide include $LiCoO_2$, $LiNiO_2$, $LiMnO_2$, $LiMn_2O_4$, $Li_2MnO_3$, $LiMn_{1/2}Ni_{1/2}O_2$, $LiNi_{1/3}Co_{1/3}Mn_{1/3}O_2$, and the like.

The binder is not particularly limited, and a binder which is generally used in the electrode can be used.

Specific examples of the binder include a fluorine-based resin such as polyvinylidene fluoride and polytetrafluoroethylene; a polymer having an unsaturated bond, such as styrene·butadiene rubber, isoprene rubber, and butadiene rubber, and the like.

<Conductive Resin Composition>

A conductive resin composition of the present invention contains the carbon black of the present invention and a resin. In the conductive resin composition of the present invention, the carbon black of the present invention is used, and thus, it is possible to produce a product in which the molecular weight of the resin is hardly reduced, and deterioration rarely occurs.

The conductive resin composition of the present invention, as necessary, may contain components other than the carbon black and the resin.

A ratio of the carbon black in the conductive resin composition (100 mass%) of the present invention is preferably within a range from 1 mass% to 70 mass%, and is more preferably within a range from 5 mass% to 60 mass%. When the ratio of the carbon black is greater than or equal to the lower limit value, a conductive resin composition having excellent conductivity is easily obtained. When the ratio of the carbon black is less than or equal to the upper limit value, a decrease in intensity of the conductive resin composition is easily suppressed.

The resin is not particularly limited, and the resin may be a thermoplastic resin or a thermosetting resin.

Examples of the thermosetting resin include phenol, melamine, epoxy, and the like.

Examples of the thermoplastic resin include a polyolefin-based resin, an elastomer-based resin, a polystyrene-based resin, and other general purpose resins. In addition, examples of the thermoplastic resin include engineering plastic, super engineering plastic, and the like.

Examples of the polyolefin-based thermoplastic resin include a homopolymer or a copolymer of olefin, a copolymer of olefin and other monomers, and the like. Specifically, examples of the polyolefin-based thermoplastic resin include a polyethylene resin such as high density, intermediate density, or low density polyethylene and straight chained low density polyethylene which are produced by a high pressure method, an intermediate pressure method, or a low pressure method; a polypropylene resin; a poly-1,2-butadiene resin; an ethylene-butene copolymer; a copolymer of ethylene, propylene, or butylene and acrylate or methacrylate; or a chloride thereof, or a mixture of two or more thereof, and the like. Among the polyolefin-based thermoplastic resins, the polyethylene resin and the polypropylene resin are preferable.

Examples of the elastomer-based thermoplastic resin include an olefin-based elastomer such as an ethylene propylene-based elastomer and an ethylene-propylene-diene rubber (EPDM)-based elastomer; a styrene-based elastomer such as styrene-butadiene-styrene and styrene-isoprene-styrene; a polyamide-based elastomer; a urethane-based elastomer; a polyester-based elastomer, and the like.

Examples of the polystyrene-based thermoplastic resin include polystyrene, an acrylonitrile-butadiene-styrene (ABS) resin, an acrylonitrile-styrene (AS) resin, an acrylonitrile-acrylic rubber-styrene (AAS) resin, and the like.

Examples of the other general purpose resins include a polyvinyl chloride (PVC) resin, an ethylene-ethyl acrylate (EEA) resin, an ethylene-vinyl acetate (EVA) resin, an acrylonitrile-ethylene·propylene rubber-styrene (AES) resin, an ethylene-vinyl alcohol resin, a polylactic acid, and the like.

Examples of the engineering plastic include a polyamide resin such as a 6-nylon resin, a 6,6-nylon resin, a 6,10-nylon resin, a 12-nylon resin, and an MXD-nylon resin; a polycarbonate resin; a polyester resin such as a polyethylene terephthalate resin and a polybutylene terephthalate resin; a polyacetal resin; a modified polyphenylene ether resin, and the like.

Examples of the super engineering plastic include a polysulfone resin, a modified polysulfone resin, a polyphenylene sulfone resin, a polyketone resin, a polyether imide resin, a polyarylate resin, a polyphenylene sulfide resin, a liquid crystal polymer, a polyether sulfone resin, a polyether ether ketone resin, a polyimide resin, a polyamide imide resin, a fluorine resin, and the like.

Examples of the polycarbonate resin include an aromatic polycarbonate resin obtained by a reaction between an aromatic dihydroxy compound and diester of phosgene or a carbonic acid, an alicyclic polycarbonate resin using an alicyclic dihydroxy compound instead of the aromatic dihydroxy compound, and the like.

Examples of the aromatic dihydroxy compound include 2,2-bis(4-hydroxy phenyl) propane, bis(4-hydroxy phenyl) methane, 1,1-bis-(4-hydroxy phenyl) ethane, 2,2-bis(4-hydroxy phenyl) propane, 2,2-bis(4-hydroxy-3-methyl phenyl) propane, 4,4'-hydroxy biphenyl, and the like.

Examples of the alicyclic dihydroxy compound include isosorbide, spiroglycol, cyclohexyl diol, and the like.

In addition, the resins may be used by being blended with each other in order to ensure physical properties according to the use application. Specifically, a blend of ABS/a polycarbonate resin, a blend of a polybutylene terephthalate resin/a polycarbonate resin, a blend of a polyphenylene ether resin/a polyamide resin/a styrene-butylene-styrene-based elastomer, and the like.

A ratio of the resin in the conductive resin composition (100 mass%) of the present invention is preferably within a range from 20 mass% to 99 mass%, and is more preferably within a range from 30 mass% to 95 mass%. When the ratio of the resin is greater than or equal to the lower limit value, a decrease in the intensity of the conductive resin composition is suppressed. When the ratio of the resin is less than or equal to the upper limit value, a conductive resin composition having excellent conductivity is easily obtained.

[Other Components]

As other components, for example, inorganic fillers such as mica, glass fiber, silica, talc, calcium carbonate, zinc oxide, barium sulfate, stainless steel, copper oxide, nickel, nickel oxide, or zirconium silicate can be mixed in order to improve heat resistance, dimensional stability, rigidity, toughness, impact resistance, or mechanical intensity. In addition, a molding aid or a processing aid may be mixed in order to suppress deterioration or to improve molding properties at the time of kneading the thermoplastic resin and the carbon black or due to aging, and specifically, a known antioxidant such as a phenol-based antioxidant or a phosphorus-based antioxidant; a lubricant such as a metallic soap or a fatty acid amide derivative, and the like may be mixed. In addition, a known flame retardant, a known plasticizer, or the like can be used according to the use application.

In a case where the conductive resin composition of the present invention contains the other components, a ratio of the other components in the conductive resin composition (100 mass%) of the present invention is preferably within a range from 0.01 mass% to 40 mass%, and is more preferably within a range from 0.1 mass% to 20 mass%.

A preparation method of the conductive resin composition of the present invention is not particularly limited, and examples of the preparation method include a method in which the resin, the carbon black, and the other components used as necessary are mixed and kneaded by a known method.

The conductive resin composition of the present invention, for example, may be formed as a pellet-like compound by melting and kneading each of the components. A method of forming the conductive resin composition of the present invention as a pellet-like compound is not particularly limited, and a method using known devices and facilities can be adopted. Examples of the method include a method in which each of the components is supplied into a kneader to be subjected to melting and kneading, extruded from a die, and pelletized by using a pelletizer or the like.

Each of the components of the conductive resin composition of the present invention, for example, may be evenly mixed by a preliminary mixer such as a tumbler and a Henschel mixer, and then may be kneaded. In addition, a specific component may be separately supplied into a kneader by using a quantitative feeder, a capacitance feeder, or the like, and may be kneaded.

Examples of the kneader include a uniaxial extruder attached with a vent, a different direction biaxial extruder, a same direction biaxial extruder, a super mixer, a Banbury mixer, a kneader, a tumbler, a cokneader, and the like.

In the present invention, the dispersibility of the carbon black is excellent, and thus, it is possible to easily prepare a conductive resin composition in which the carbon black is excellently dispersed in the resin even in a known kneading method.

A method of producing a conductive product by using the conductive resin composition of the present invention is not particularly limited, and for example, injection molding, extrusion molding, or the like can be suitably selected according to the use application.

The application of the conductive resin composition of the present invention is not particularly limited, and examples of the application include a conductive material for an automobile, a semiconductor package, a power cable, and the like.

[Examples]

Hereinafter, the present invention will be described in detail with reference to examples, but the present invention is not limited to the following description.

[X-ray Absorption Fine Structure (XAFS) Analysis]

XAFS measurement was performed with respect to an evaluation sample obtained in each example, to thereby obtain a radial distribution function in which an EXAFS spectrum of a K absorption edge was subjected to Fourier transform. In the radial distribution function, peak intensity $I_A$ of a main peak derived from $Fe_3C$, peak intensity $I_B$ of a main peak derived from FeS, and peak intensity $I_C$ of a main peak derived from FeO(OH) were respectively obtained, and $I_A / (I_B+I_C)$ was calculated. In the XAFS measurement, Beamline BL-19 and Beamline BL-12C of High Energy Accelerator Research Organization (KEK) Institute of Materials Structure Science Photon Factory were used.

[Measurement of Fe Amount]

The amount of Fe contained in the evaluation sample obtained in each example was measured by a plasma atomic emission spectrophotometer (ICP) method. The evaluation sample 1.5 g was heated and calcified at a temperature of 600°C to 800°C for 12 hours while introducing oxygen, to thereby obtain a calcified sample. The calcified sample was put into 40 mL of the aqua regia in which 36% HCl (for atomic absorption analysis, manufactured by Wako Pure Chemical Industries, Ltd.) and $HNO_3$ (for atomic absorption analysis, manufactured by Wako Pure Chemical Industries, Ltd.) were mixed at a ratio of 3:1, and a metal component was boiled and dissolved while being boiled at 100°C. An undissolved component was removed by solid and liquid separation by vacuum filtration using a membrane filter (1 $\mu$m), and the obtained sample liquid was diluted to have a suitable concentration and was measured by an ICP method. Optima 5300 DV (manufactured by PerkinElmer Co., Ltd.) was used as an ICP analysis device.

[Dispersibility Evaluation]

The dispersibility was evaluated by a method based on "Method of Obtaining Sieve Residue" of JIS K 6218-3.
A sieve having a mesh size of 45 $\mu$m (330 meshes) was washed with ethyl alcohol, and then, was sufficiently washed with water (distilled water), and was dried in a drier at 105°C for 60 minutes. 100 (g) of the evaluation sample of each of the examples was sampled, was put onto the sieve, and was washed with water having a water pressure of 0.2 MPa to 0.5 MPa. At this time, a lump of the carbon black which had remained on the sieve was lightly crushed by a finger, and was gently washed with washing water. Next, the evaluation sample on the sieve was moved to a Petri dish, was dried in a drier at 105°C for 60 minutes, and then, was weighed up to the digit of 0.1 mg and was set to $W_1$ (g), and a sieve residue $W_R$ (ppm by mass) was calculated by following Expression (3).

$$W_R = [W_1 \, (g) / 100 \, (g)] \times 10^6 \quad (3)$$

Dispersibility was evaluated on the basis of the following criteria.

A: $W_R$ is less than 300 ppm by mass.
B: $W_R$ is greater than or equal to 300 ppm by mass and less than 1000 ppm by mass.
C: $W_R$ is greater than or equal to 1000 ppm by mass and less than 5000 ppm by mass.
D: $W_R$ is greater than or equal to 5000 ppm by mass.

[Resin Decomposability Evaluation]

By using a stirrer (Product Name: LABO PLASTOMILL, Maker Name: Toyo Seiki Seisaku-sho Ltd.), 53 g of a polycarbonate (PC) pellet was stirred while being heated at 290°C. At this time, the number of rotations of the stirrer was 15 rpm, and the PC pellet was put into the stirrer for 2 minutes. Next, 5 g of the evaluation sample obtained in each example was put into the stirrer for 8 minutes, was mixed for 60 minutes by increasing the number of rotations of the stirrer to be 100 rpm, and then, was cooled. Therefore, a mixed sample was prepared. The mixed sample was dissolved in tetrahydrofuran (THF) such that a mass ratio of the mixed sample became 0.2 mass%, approximately 5 mass% of activated clay was added with respect to the total mass thereof and was left to stand for 12 hours, a liquid layer and a solid layer were separated from each other, and then, a supernatant was removed by a syringe, and a filtrate which had passed through a membrane filter of 45 $\mu$m was set to a measurement sample. The weight average molecular weight (Mw) of PC in the measurement sample was measured by using gel permeation chromatography-multiangle light scattering (GPC-MALLS: Gel Permeation Chromatography System (manufactured by Shimadzu Corporation)).
In addition, a standard measurement sample of PC was prepared by the same method as described above except that the evaluation sample was not mixed, and then, Mw of PC was measured. A reduction rate of Mw of PC in the measurement sample in which the evaluation sample of each of the examples and PC were mixed with respect to Mw of Pc in the standard measurement sample was calculated.
Resin decomposability was evaluated on the basis of the following criteria.

A: The reduction rate of the molecular weight is less than 0.3%.
B: The reduction rate of the molecular weight is greater than or equal to 0.3% and less than 0.5%.
C: The reduction rate of the molecular weight is greater than or equal to 0.5% and less than 5%.
D: The reduction rate of the molecular weight is greater than or equal to 5%.

[Metal (Fe) Elution Properties Evaluation]

The aqua regia 10 mL in which 36% HCl (for atomic absorption analysis, manufactured by Wako Pure Chemical Industries, Ltd.) and $HNO_3$ (for atomic absorption analysis, manufactured by Wako Pure Chemical Industries, Ltd.) were mixed at a ratio of 3:1, 75 g of ion exchange water, and 1.5 g of the evaluation sample of each of the examples were stirred for 2 hours while being heated at 60°C. The obtained slurry was subjected to vacuum filtration by a membrane filter (1 $\mu$m), to thereby filtrate a solid content, and a filtrate was diluted to have a suitable concentration and was set to a test liquid for metal analysis. Fe eluted onto the test liquid was measured as the Fe amount with respect to carbon by a plasma atomic emission spectrophotometer (ICP) method. Optima 5300 DV (manufactured by PerkinElmer Co., Ltd.) was used as an ICP analysis device.

Metal elution properties were evaluated on the basis of the following criteria.

B: The elution amount of metal is less than 4 ppm by mass.
D: The elution amount of metal is greater than or equal to 4 ppm by mass.

[Raw Material Carbon Black]

The codes of raw material carbon blacks used in this example are as follows.

CB-1: Lionite CB (manufactured by Lion Corporation),
CB-2: SUPER P Li (manufactured by Timcal Japan K.K.),
CB-3: Denka Black Granule (manufactured by Denka Company Limited.),
CB-4: Ketjen Black EC300J (manufactured by Lion Corporation),
CB-5: Ketjen Black EC600JD (manufactured by Lion Corporation), and
CB-6: PRINTEX XE-2 (manufactured by Orion Engineering Carbons).

[Example 1]

In the center of a furnace core tube, 50 g (dry mass) of a powder of CB-1 was disposed as raw material carbon black, and was heated at 900°C for 30 minutes while circulating a chlorine gas as a halogen element-containing gas at 10 L/minute and an argon gas at 1 L/minute simultaneously. Next, a hydraulic diffusion pump was operated so as to reduce the degree of vacuum within a range from 1.33 x $10^{-1}$ Pa to 1.33 × $10^{-2}$ Pa and to keep it for 30 minutes, and then, a powder of CB-1 was cooled to 30°C to thereby obtain the evaluation sample.

[Examples 2 and 3]

An evaluation sample was obtained by the same method as that in Example 1 except that the heating temperature was changed as shown in Table 1.

[Examples 4 to 17]

An evaluation sample was obtained by the same method as that in Example 1 except that raw material carbon black to be used, the heating temperature, and the halogen element-containing gas were changed as shown in Table 1 and Table 2.

[Comparative Examples 1 to 3]

An evaluation sample was obtained by the same method as that in Example 1 except that the heating temperature was changed as shown in Table 3.

[Comparative Example 4]

An evaluation sample was obtained by the same method as that in Example 1 except that the heating temperature was set to 1200°C, and the heating time was set to 420 minutes.

[Comparative Example 13]

An evaluation sample was obtained by the same method as that in Example 1 except that the raw material carbon black, the heating temperature, and the heating time were changed as shown in Table 3.

[Comparative Examples 5 to 7]

An evaluation sample was obtained by the same method as that in Example 1 except that the chlorine gas and the argon gas were not circulated at the time of heating, and the heating temperature was set as shown in Table 3.

[Comparative Examples 8 to 12 and 14]

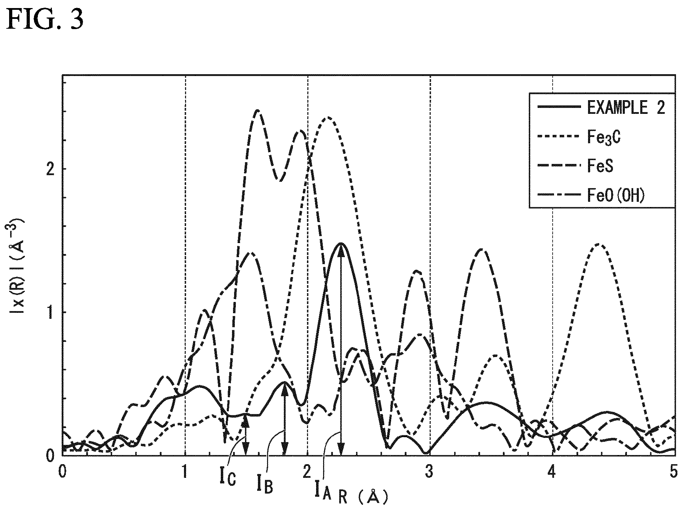

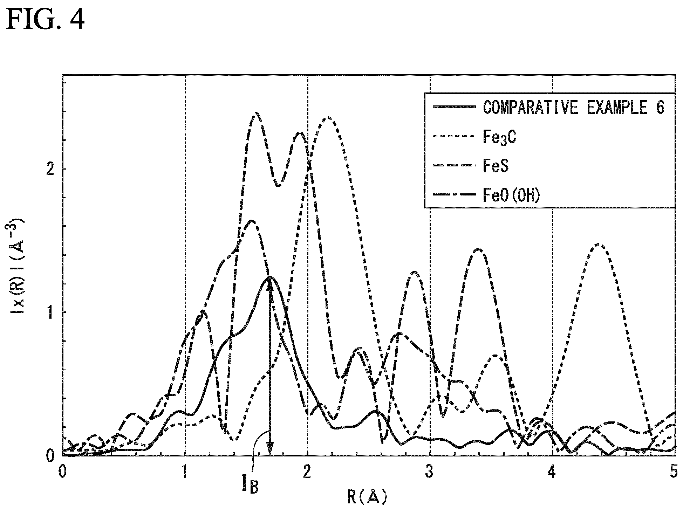

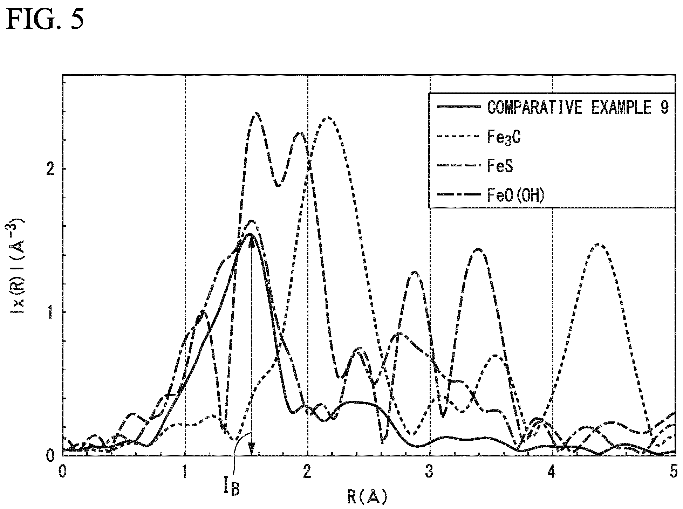

Raw material carbon black shown in Table 3 was directly used as an evaluation sample.
The measurement results of the DBP oil absorption amount, the BET specific surface area, the Fe amount, and $I_A/(I_B+I_C)$ of each of the examples, and evaluation results of the dispersibility, the resin decomposability, and the metal elution properties are shown in Table 1 to Table 3. In addition, graphs of radial distribution functions of Example 2, Comparative Example 6, and Comparative Example 9 are respectively illustrated in FIGS. 3 to 5 as a representative example.

[Table 1]

| | Raw Material Carbon Black | Heating Conditions | | | Halogen Element-Containing Gas | DBP Oil Absorption Amount | BET Specific Surface Area | Fe Amount [ppm by mass] | $I_A/(I_B+I_C)$ | Dispersibility | Resin Decomposability | Metal Elution Properties |
|---|---|---|---|---|---|---|---|---|---|---|---|---|
| | | Temperature [°C] | Time [minute] | Degree of Vacuum [mPa] | | | | | | | | |
| Example 1 | CB-1 | 900 | 30 | 1.33 | Chlorine | 400 | 1000 | 26 | 0.79 | A | B | B |
| Example 2 | CB-1 | 1200 | 30 | 1.33 | Chlorine | 390 | 930 | 5 | 1.82 | A | A | B |
| Example 3 | CB-1 | 1500 | 30 | 1.33 | Chlorine | 300 | 550 | 3 | 3.21 | B | A | B |
| Example 4 | CB-2 | 900 | 30 | 1.33 | Chlorine | 250 | 60 | 3 | 1.70 | A | A | B |
| Example 5 | CB-3 | 900 | 30 | 1.33 | Chlorine | 200 | 70 | 2 | 1.52 | A | A | B |
| Example 6 | CB-4 | 900 | 30 | 1.33 | Chlorine | 365 | 790 | 3 | 1.45 | A | A | B |
| Example 7 | CB-5 | 900 | 30 | 1.33 | Chlorine | 490 | 1360 | 5 | 1.42 | A | A | B |
| Example 8 | CB-6 | 900 | 30 | 1.33 | Chlorine | 410 | 1100 | 26 | 0.72 | A | B | B |
| Example 9 | CB-6 | 1200 | 30 | 1.33 | Chlorine | 400 | 1030 | 5 | 1.98 | A | A | B |

[Table 2]

| | Raw Material Carbon Black | Heating Conditions | | | Halogen Element-Containing Gas | DBP Oil Absorption Amount | BET Specific Surface Area | Fe Amount [ppm by mass] | $I_A / (I_B+I_C)$ | Dispersibility | Resin Decomposability | Metal Elution Properties |
| | | Temperature [°C] | Time [minute] | Degree of Vacuum [mPa] | | | | | | | | |
|---|---|---|---|---|---|---|---|---|---|---|---|---|
| Example 10 | CB-6 | 1500 | 30 | 1.33 | Chlorine | 300 | 725 | 3 | 3.55 | B | A | B |
| Example 11 | CB-1 | 1200 | 30 | 1.33 | Hydrogen Chloride | 490 | 960 | 1 | 1.78 | A | A | B |
| Example 12 | CB-2 | 1200 | 30 | 1.33 | Hydrogen Chloride | 244 | 58 | 2 | 2.00 | A | A | B |
| Example 13 | CB-3 | 1200 | 30 | 1.33 | Hydrogen Chloride | 200 | 68 | 2 | 2.32 | A | A | B |
| Example 14 | CB-4 | 1200 | 30 | 1.33 | Hydrogen Chloride | 360 | 720 | 3 | 1.82 | A | A | B |
| Example 15 | CB-5 | 1200 | 30 | 1.33 | Hydrogen Chloride | 480 | 1240 | 3 | 1.75 | A | A | B |
| Example 16 | CB-6 | 900 | 30 | 1.33 | Hydrogen Chloride | 420 | 1100 | 9 | 0.78 | A | B | B |
| Example 17 | CB-6 | 1200 | 30 | 1.33 | Hydrogen Chloride | 400 | 1050 | 3 | 1.98 | A | A | B |
| Example 18 | CB-6 | 1500 | 30 | 1.33 | Hydrogen Chloride | 300 | 630 | 2 | 3.18 | B | A | B |

13

[Table 3]

| | Raw Material Carbon Black | Heating Conditions | | | Halogen Element-Containing Gas | DBP Oil Absorption Amount | BET Specific Surface Area | Fe Amount [ppm by mass ] | $I_A//(I_B+I_C)$ | Dispersibility | Resin Decomposability | Metal Elution Properties |
|---|---|---|---|---|---|---|---|---|---|---|---|---|
| | | Temperature [°C] | Time [minute] | Degree of Vacuum [mPa] | | | | | | | | |
| Comparative Example 1 | CB-1 | 800 | 30 | 1.33 | Chlorine | 405 | 990 | 500 | 0.58 | A | C | D |
| Comparative Example 2 | CB-1 | 1600 | 30 | 1.33 | Chlorine | 370 | 430 | 5 | 6.22 | D | A | B |
| Comparative Example 3 | CB-1 | 2200 | 30 | 1.33 | Chlorine | 290 | 230 | 3 | 11.00 | D | A | B |
| Comparative Example 4 | CB-1 | 1200 | 420 | 1.33 | Chlorine | 300 | 500 | 4 | 6.72 | D | A | B |
| Comparative Example 5 | CB-1 | 900 | 30 | 1.33 | None | 400 | 1000 | 1800 | 0 | A | D | D |
| Comparative Example 6 | CB-1 | 1200 | 30 | 1.33 | None | 395 | 940 | 1550 | 0 | B | D | D |
| Comparative Example 7 | CB-1 | 1500 | 30 | 1.33 | None | 310 | 550 | 1200 | 0 | C | D | D |
| Comparative Example 8 | CB-4 | - | - | - | - | 310 | 800 | 18 | 0.33 | A | C | D |
| Comparative Example 9 | CB-5 | - | - | - | - | 495 | 1400 | 52 | 0 | A | C | D |
| Comparative Example 10 | CB-1 | - | - | - | - | 410 | 1020 | 2200 | 0.19 | A | D | D |
| Comparative Example 11 | CB-3 | - | - | - | - | 205 | 72 | 8 | 0.61 | A | C | D |
| Comparative Example 12 | CB-2 | - | - | - | - | 255 | 61 | 12 | 0.45 | A | C | D |
| Comparative Example 13 | CB-6 | 800 | 30 | 1.33 | Chlorine | 400 | 990 | 320 | 0.55 | A | C | D |

EP 3 031 867 A1

14

(continued)

| | Raw Material Carbon Black | Heating Conditions | | | Halogen Element-Containing Gas | DBP Oil Absorption Amount | BET Specific Surface Area | Fe Amount [ppm by mass ] | $I_A//(I_B+I_C)$ | Dispersibility | Resin Decomposability | Metal Elution Properties |
|---|---|---|---|---|---|---|---|---|---|---|---|---|
| | | Temperature [°C] | Time [minute] | Degree of Vacuum [mPa] | | | | | | | | |
| Comparative Example 14 | CB-6 | - | - | - | - | 395 | 950 | 1500 | 0.11 | A | D | D |

As shown in Table 1 to Table 3, in Examples 1 to 17 where $I_A$ / ($I_B$+$I_C$) satisfies the conditions of Expression (1), the dispersibility of the carbon black was excellent, and a reduction in the molecular weight of the resin and the elution of the metal component were suppressed.

In contrast, in Comparative Examples 2 to 4 where $I_A$ / ($I_B$+$I_C$) was greater than 6.0, the dispersibility of the carbon black was insufficient.

In addition, in Comparative Examples 1, and 5 to 14 where $I_A$ / ($I_B$+$I_C$) was less than 0.7, a reduction in the molecular weight of the resin was observed, and the elution amount of the metal component was also considerable.

**Claims**

1. Carbon black in which peak intensity $I_A$ of a main peak derived from $Fe_3C$, peak intensity $I_B$ of a main peak derived from FeS, and peak intensity $I_C$ of a main peak derived from FeO(OH) in a radial distribution function, which is obtained by performing Fourier transform with respect to a broadband X-ray absorption fine structure spectrum of a K absorption edge, satisfy conditions of the following Expression (1).

$$0.7 \leq I_A / (I_B + I_C) \leq 6.0 \quad (1)$$

2. The carbon black according to claim 1, wherein a DBP oil absorption amount is within a range from 100 to 600 $cm^3$/100 g.

3. The carbon black according to claim 1 or 2, wherein a BET specific surface area is within a range from 50 to 1600 $m^2$/g.

4. An electricity storage device comprising an electrode containing the carbon black according to any one of claims 1 to 3.

5. A conductive resin composition containing the carbon black according to any one of claims 1 to 3.

6. A production method for a carbon black, comprising subjecting raw material carbon black to a heat treatment at a temperature of 900°C to 1500°C for a time of 5 minutes to 180 minutes under an atmosphere of a halogen element-containing gas, to thereby producing the carbon black according to any one of claims 1 to 3.

7. The production method for a carbon black according to claim 6, wherein the halogen element-containing gas is a chlorine gas or a hydrogen chloride gas.

FIG. 1

FIG. 2

FIG. 3

FIG. 4

FIG. 5

## INTERNATIONAL SEARCH REPORT

| | International application No. |
|---|---|
| | PCT/JP2014/070821 |

A. CLASSIFICATION OF SUBJECT MATTER
*C09C1/48*(2006.01)i, *C08K3/04*(2006.01)i, *C08L101/00*(2006.01)i, *C09C1/56*
(2006.01)i, *H01B1/04*(2006.01)i, *H01B1/24*(2006.01)i

According to International Patent Classification (IPC) or to both national classification and IPC

B. FIELDS SEARCHED

Minimum documentation searched (classification system followed by classification symbols)
C09C1/48, C08K3/04, C08L101/00, C09C1/56, H01B1/04, H01B1/24

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2001-288382 A (Tokai Carbon Co., Ltd.), 16 October 2001 (16.10.2001), paragraph [0025] | 1-7 |
| A | JP 62-184064 A (Tokai Carbon Co., Ltd.), 12 August 1987 (12.08.1987), claim 2 | 1-7 |
| A | JP 2007-505975 A (Columbian Chemicals Co., Superior Graphite Co.), 15 March 2007 (15.03.2007), claim 8 | 1-7 |

☐ Further documents are listed in the continuation of Box C.     ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 29 October, 2014 (29.10.14) | 11 November, 2014 (11.11.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

<table>
<tr><td colspan="2" align="center">**INTERNATIONAL SEARCH REPORT**<br>Information on patent family members</td><td>International application No.<br>PCT/JP2014/070821</td></tr>
</table>

| | | |
|---|---|---|
| JP 2001-288382 A | 2001.10.16 | (Family: none) |
| JP 62-184064 A | 1987.08.12 | (Family: none) |
| JP 2007-505975 A | 2007.03.15 | US 2005/0063892 A1<br>US 2005/0063893 A1<br>EP 1675917 A2<br>WO 2005/028569 A2<br>KR 10-2006-0123120 A<br>CN 1856554 A<br>BR PI0414310 A |

Form PCT/ISA/210 (patent family annex) (July 2009)

**EP 3 031 867 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013165223 A
- JP 2005113091 A
- JP 58222157 A
- JP 2005220320 A
- JP 2002105355 A